# EUROPEAN PATENT SPECIFICATION

(11) **EP 2 144 318 B1**
(45) Date of publication and mention of the grant of the patent: **13.04.2016**
(21) Application number: 08721141.3
(22) Date of filing: 26.02.2008
(51) Int. Cl.: H01M 8/02, C08J 5/22, H01B 13/00, H01M 8/10

(54) **METHOD FOR PRODUCING POLYMER ELECTROLYTE MEMBRANE FOR SOLID POLYMER FUEL CELL, MEMBRANE ELECTRODE ASSEMBLY FOR SOLID POLYMER FUEL CELL, AND SOLID POLYMER FUEL CELL**
VERFAHREN ZUM HERSTELLEN EINER POLYMERELEKTROLYTMEMBRAN FÜR EINE FESTPOLYMER-BRENNSTOFFZELLE, MEMBRAN-ELEKTRODENBAUGRUPPE FÜR EINE FESTPOLYMER-BRENNSTOFFZELLE UND FESTPOLYMERBRENNSTOFFZELLE
PROCÉDÉ POUR PRODUIRE UNE MEMBRANE ÉLECTROLYTIQUE POLYMÈRE POUR PILE À COMBUSTIBLE À POLYMÈRE SOLIDE, ASSEMBLAGE D'ÉLECTRODE À MEMBRANE POUR PILE À COMBUSTIBLE À POLYMÈRE SOLIDE ET PILE À COMBUSTIBLE À POLYMÈRE SOLIDE

(30) Priority: 25.04.2007 JP 2007115951
(43) Date of publication of application: 13.01.2010
(73) Proprietor: W.L. Gore & Associates, Co., Ltd., Tokyo 108-0075 (JP)
(72) Inventor: TAKANE, Tomoyuki, Tokyo 156-8505 (JP); KATO, Hiroshi, Tokyo 156-8505 (JP); FUJIMOTO, Hiroyoshi, Tokyo 156-8505 (JP); ISHIKAWA, Masahiko, Tokyo 156-8505 (JP)
(74) Representative: Klunker . Schmitt-Nilson . Hirsch
(86) International application number: PCT/JP2008/053721
(87) International publication number: WO 2008/132875

(56) References cited:
- WO-A1-2005/105667
- WO-A1-2005/124912
- WO-A2-2004/023576
- WO-A2-2005/071779
- JP-A- 2002 231 270
- JP-A- 2005 285 356
- JP-A- 2007 042 491
- US-A- 5 919 583
- US-A1- 2004 224 203

## Description

### TECHNICAL FIELD

The present invention relates to a production process of a polymer electrolyte membrane of a solid polymer electrolyte fuel cell, a membrane electrode assembly, and a solid polymer electrolyte fuel cell.

### BACKGROUND ART

Fuel cells have recently attracted attention as highly efficient energy conversion devices. Fuel cells are broadly classified according to the type of electrolyte used as low-temperature operation fuel cells, such as alkaline, solid polymer electrolyte or phosphoric acid fuel cells, and high-temperature operation fuel cells, such as molten carbonate or solid oxide fuel cells. Among these, solid polymer electrolyte fuel cells (PEFC), which use a polymer electrolyte membrane having ion conductivity for the electrolyte, have a compact structure, allow the obtaining of high output density, do not use a liquid for the electrolyte and are able to operate at low temperatures, thereby enabling the realization of a simple system, and have attracted attention for use as stationary, vehicular and portable power sources.

The basic principle of solid polymer electrolyte fuel cells consists of arranging a gas diffusion electrode layer on both sides of a polymer electrolyte membrane, exposing the anode side to fuel gas (such as hydrogen) and exposing the cathode side to oxidant gas (such as air), synthesizing water by a chemical reaction through the polymer electrolyte membrane, and electrically extracting the resulting reaction energy generated. Since a side reaction in the form of an oxygen reduction reaction at the cathode of the solid polymer electrolyte fuel cell process by going through hydrogen peroxide (H₂O₂), there is the risk of the electrolyte that composes the cathode electrode layer or the polymer electrolyte membrane adjacent thereto being deteriorated by the hydrogen peroxide or peroxide radicals formed in the cathode electrode layer. In addition, if a phenomenon (crossover) occurs at the anode in which oxygen molecules pass from the cathode through the polymer electrolyte membrane, hydrogen peroxide or peroxide radicals are similarly formed, potentially resulting in the risk of deterioration of the electrolyte that composes the anode electrode layer.

A method is known for preventing deterioration of the polymer electrolyte membrane by peroxides formed in the electrode layer that consists of dispersing and incorporating a transition metal oxide having catalytic ability that catalytically decomposes peroxides, and particularly manganese oxide, ruthenium oxide, cobalt oxide, nickel oxide, chromium oxide, iridium oxide or lead oxide, in the polymer electrolyte membrane (Japanese Unexamined Patent Publication No. 2001-118591). Japanese Unexamined Patent Publication No. 2001-118591 describes a method for dispersing and incorporating a transition metal oxide by dispersing a transition metal oxide in a solution of a polymer electrolyte followed by solidifying the polymer electrolyte, or containing the transition metal in a polymer electrolyte in the form of a soluble or insoluble salt or other compound followed by converting to the form of a solid oxide by hydrolysis, a sol-gel reaction, oxidation-reduction reaction or other reaction.

In addition, a method for enhancing the resistance to hydrogen peroxide or peroxide radicals of a sulfonic acid group-containing polymer electrolyte membrane of a solid polymer electrolyte fuel cell is known that consists of ion-replacing a portion of the sulfonic acid groups with cerium ions or manganese ions (Japanese Unexamined Patent Publication No. 2006-99999).

Similarly, a method for enhancing the resistance to hydrogen peroxide or peroxide radicals of a sulfonic acid group-containing polymer electrolyte membrane of a solid polymer electrolyte fuel cell is known that consists of adding and mixing fine granules of a poorly soluble cerium compound to the polymer electrolyte membrane (Japanese Unexamined Patent Publication No. 2006-107914).

In addition, a method is known for preventing deterioration of a solid polymer electrolyte membrane by decomposing hydrogen peroxide formed in an electrode layer of a solid polymer electrolyte fuel cell before it infiltrates the solid polymer electrolyte membrane that consists of adding an oxide catalyst such as manganese oxide, ruthenium oxide or tungsten oxide to the electrode layer (Japanese Unexamined Patent Publication No. 2000-106203).

International Patent Application No WO 2005/071779 discloses a process for increasing an ion exchange membrane's resistance to peroxide radical attack in a fuel cell environment comprising the use of catalytically active components capable of decomposing hydrogen peroxide as well as method for preparing a catalytically active component for use therein.

U.S. Patent No. 5,919,583 discloses cation exchange membranes, made from polymer having cation exchange groups and containing inorganic filler which exhibit reduced fuel crossover for fuel cells employing direct feed organic fuels such as methanol and, when inorganic proton conductor is employed, enhanced proton conductivity.

2002-231270 discloses a manufacturing method of an ion exchange resin membrane for a fuel cell having little dimensional change caused by water absorption and dehydration, wherein a metal oxide precursor of elements comprising Al, B, P, Si, Ti, Zr, and Y is added to a solution containing an ion exchange resin, and a liquid is obtained by applying hydrolysis and polycondensation reaction to the metal oxide precursor. This ion exchange resin membrane is manufactured by forming the liquid into a membrane by casting. ¶

### DISCLOSURE OF INVENTION

However, according to the method described in Japanese Unexamined Patent Publication No. 2001-118591 , since a transition metal oxide is dispersed in a polymer electrolyte membrane in the form of fine granules, there is the problem of the fine granules aggregating at the time of production or use, as well as the problem of the fine granules leaving the polymer electrolyte membrane at the time of use.

In addition, according to the method described in Japanese Unexamined Patent Publication No. 2006-99999 , when a portion of the sulfonic acid groups are replaced with cations, the sulfonate acid groups no longer contribute to conduction of hydrogen ions, thereby resulting in the problem of being accompanied by a decrease in power generation performance as compensation for preventing deterioration of the polymer electrolyte membrane.

According to the method described in Japanese Unexamined Patent Publication No. 2006-107914 , although fine granules of a poorly soluble cerium compound are stated as being able to be uniformly dispersed in a polymer electrolyte membrane, it is impossible to uniformly disperse cerium at the nano level, while there is also concern over aggregation of the fine particles and elimination of the fine particles from the electrolyte membrane.

In addition, in the method described in Japanese Unexamined Patent Publication No. 2000-106203 as well, since a powder of an oxide catalyst is merely added to a binder of an electrode layer, it is impossible to uniformly disperse the oxide catalyst at the nano level, while there is also the problems of aggregation of the oxide and elimination from the electrode layer.

Thus, an object of the present invention is to enhance the durability of a solid polymer electrode fuel cell by inhibiting deterioration of the polymer electrolyte membrane of the solid polymer electrolyte fuel cell without impairing power generation performance.

Thus, the present invention provides the following:
(1) a production process of a polymer electrolyte membrane for a solid polymer electrolyte fuel cell, comprising the steps of:
   preparing a solution or dispersion of an alkoxide of a transition element or a rare earth element having catalytic ability that decomposes peroxides,
   preparing a solution of a polymer electrolyte for a solid polymer electrolyte fuel cell,
   uniformly mixing the solution or dispersion of the alkoxide with the solution of the polymer electrolyte, and
   hydrolyzing and condensing the alkoxide when forming a polymer electrolyte membrane in which the transition element or the rare earth element is uniformly dispersed from the mixed solution, wherein the material of the polymer electrolyte membrane contains a fluorine-based polymer compound, and wherein the transition element or the rare earth element is at least one type selected from the group consisting of cerium, manganese, tungsten, vanadium, neodymium, cobalt, chromium, molybdenum and iron.
(2) the production process described in (1), wherein the material of the polymer electrolyte membrane contains a combination of a fluorine-based polymer compound and a non-fluorine-based polymer compound;
(3) the production process described in any of (1) to (2), wherein the material of the polymer electrolyte membrane contains a polymer compound having a sulfonic acid group;
(4) the production process described in any of (1) to (3), wherein the added amount of the alkoxide is within the range of 0.05 to 80% by weight based on the material of the polymer electrolyte membrane;
(5) the production process described in any of (1) to (4), wherein an alkoxide of phosphorous or a phosphorous compound is further added to the solution or dispersion of the alkoxide;
(6) the production process described in any of (1) to (5), further comprising a step in which a laminated membrane having two or more layers is formed by combining a polymer electrolyte membrane not containing the transition element or the rare earth element;
(7) the production process described in any of (1) to (6), further comprising a step in which a laminated membrane having two or more layers is formed by combining a layer containing a catalyst able to oxidize hydrogen on the cathode side;
(8) the production process described in (7), wherein the catalyst able to oxidize hydrogen is a metal-loaded carbon catalyst;
(9) the production process described in any of (1) to (5), wherein the polymer electrolyte membrane contains catalyst particles for acting as an electrode layer of a solid polymer electrolyte fuel cell;
(10) a membrane electrode assembly for a solid polymer electrolyte fuel cell, comprising: a polymer electrolyte membrane for a solid polymer electrolyte fuel cell, obtained according to the production process described in any of (1) to (8), and an electrolyte layer;
(11) a membrane electrode assembly for a solid polymer electrolyte fuel cell, comprising: the polymer electrolyte membrane for a solid polymer electrolyte fuel cell obtained according to the production process described in (9) as at least one of the electrode layers; and,
(12) a solid polymer electrolyte fuel cell, comprising:
   the membrane electrode assembly described in (10) or (11).

### BRIEF DESCRIPTION OF THE DRAWINGS

FIG. 1 is a graph showing the dynamic viscoelastic behavior of a polymer electrolyte membrane.
FIG. 2 is a scanning electron micrograph (SEM) showing the dispersibility of Ce in a polymer electrolyte membrane.
FIG. 3 is a graph showing the dynamic viscoelastic behavior of a polymer electrolyte membrane.
FIG. 4 is a graph showing the power generation performance of a polymer electrolyte membrane.

### BLEST MODE FOR CARRYING OUT THE INVENTION

A production process of a polymer electrolyte membrane for a solid polymer electrolyte fuel cell according to a first aspect of the present invention comprises a step for preparing a solution or dispersion of an alkoxide of a transition element or rare earth element having catalytic ability that decomposes peroxides, a step for preparing a solution of a polymer electrolyte membrane for a solid polymer electrolyte fuel cell, a step for uniformly mixing the solution or dispersion of the alkoxide with the solution of the polymer electrolyte membrane, and a step for hydrolyzing and condensing the alkoxide during formation of a polymer electrolyte membrane in which the transition element or the rare earth element is uniformly dispersed.

There are no particular limitations on the transition element or rare earth element having catalytic ability that decomposes peroxides provided it rapidly decomposes peroxides (and particularly hydrogen peroxide) formed in the electrode layer during operation of the solid polymer electrolyte fuel cell when in the form of the corresponding oxide. Examples of such transition elements or rare earth elements of the invention include cerium (Ce), manganese (Mn), tungsten (W), vanadium (V), neodymium (Nd), cobalt (Co), chromium (Cr), molybdenum (Mo) and iron (Fe).

According to the present invention, a solution or dispersion of an alkoxide of a transition element or rare earth element as described above is prepared. An alkoxide of a transition element or rare earth element is generally represented as M(OR)ₙ. M represents a transition element or rare earth element, R represents an alkyl group having 1 to 5 carbon atoms, and n represents a number equal to the valence of M. Specific examples of alkoxides of transition elements or rare earth elements include Ce (OC₂H₅)₃, Ce (O-i-C₃H)₃, Mn (O-i-C₃H₇)₂, W (OC₂H₅)₃, W(O-i-C₃H₇)₃, MO (OC₂H₅)₅, Nd(O-i-C₃H₇)₇, Co(O-i-C₃H-₇)_{2,} VC)(OCH₃)₃, VO(OC₂H₅)₃, VO(O-i-C₃H₇)₃, VO(O-n-C₃H₇)3, VO (O-i-C₄H₉)₃, VO(O-n-C₄H₉)₃, VO(O-sec-C₄H₉)₃ Fe (OCH₃)₃, Fe (OC₂H₅)₃, Fe (O-i-C₃H₇)₃, Fe (O-n-C₃H₇)₃ and Fe (O-i-C₄H₉)₃.

There are no particular limitations on the solvent or dispersant for preparing a solution or dispersion of an alkoxide of a transition element or rare earth element provided it enables the preparation of a stable solution or dispersion of the alkoxide. Specific examples of such solvents or dispersants include methanol, ethanol, propanol, decanol, methylene glycol, xylene, toluene, naphtalene and combinations thereof. Although there are no particular limitations on the concentration of the alkoxide of a transition element or rare earth element in the solution or dispersion, the concentration is typically within the range of 0.01 to 5 mol/L and preferably within the range of 0.03 to 0.3 mol/L. In the case the alkoxide of a transition element or rare earth element forms a dispersion, the amount of the dispersoid is preferably as small as possible in order to enhance the dispersion uniformity in a polymer electrolyte membrane. In addition, a dispersant for stabilizing this dispersion may also be suitably contained. Furthermore, in the case the alkoxide of a transition element or rare earth element is a liquid, a peroxide-decomposing catalyst can be uniformly dispersed at the nano level by allowing this to permeate directly into a polymer electrolyte membrane without diluting with a solvent or dispersant.

According to the first aspect of the present invention, a solution of a fluorine-based polymer compound for a polymer electrode membrane for a solid polymer electrolyte fuel cell is formed. There are no particular limitations on the polymer electrolyte membrane for a solid polymer electrolyte fuel cell provided it has high proton (H⁺) conductivity, electron insulating properties and is impermeable to gases. Typical examples of polymer electrolyte membranes include resins having a fluorine-containing polymer backbone and a group such as a sulfonic acid group, carboxyl group, phosphoric acid group or phosphonic acid group. Since the thickness of the polymer electrolyte membrane has a considerable effect on resistance, the polymer electrolyte membrane is required to be as thin as possible without impairing electron insulating properties or gas impermeability, and the thickness thereof is specifically set to within the range of 5 to 50 µm and preferably 10 to 30 µm. The material of the polymer electrolyte membrane in the present invention is not limited to entirely fluorine-based polymer compounds, but rather may also be a mixture with a hydrocarbon-based polymer or inorganic polymer compound, or a partially fluorine-based polymer compound containing both C-H bonds and C-F bonds in the polymer chain. Specific examples of hydrocarbon-based polymer electrolytes include polyamides, polyacetals, polyethylenes, polypropylenes, acrylic resins, polyesters, polysulfones, polyethers and derivatives thereof (aliphatic hydrocarbon-based polymer electrolytes) into which have been introduced an electrolytic group such as a sulfonic acid group, polystyrenes into which have been introduced an electrolytic group such as a sulfonic acid group, polyamides, polyamidoimides, polyimides, polyesters, polysulfones, polyetherimides, polyethersulfones, polycarbonates and derivatives thereof (partially aromatic hydrocarbon-based polymer electrolytes) having an aromatic ring, and polyether ether ketones, polyether ketones, polyether sulfones, polycarbonates, polyamides, polyamidoimides, polyesters, polyphenylene sulfides and derivatives thereof (entirely aromatic hydrocarbon-based polymer electrolytes) in which have been introduced an electrolytic group such as a sulfonic acid group. Specific examples of partially fluorine-based polymer electrolytes include polystyrene-graft-ethylene-tetrafluoroethylene copolymers, polystyrene-graft-polytetrafluoroethylene and derivatives thereof into which have been introduced an electrolytic group such as a sulfonic acid group. Specific examples of entirely fluorine-based polymer electrolyte membranes include a perfluoropolymer having a sulfonic acid group in a side chain thereof in the form of Nafion (registered trademark) membranes (DuPont), Aciplex (registered trademark) membranes (Asahi Kasei), and Fremion (registered trademark) membranes (Asahi Glass). In addition, preferable examples of inorganic polymer compounds include siloxane-based or silane-based, and particularly alkylsiloxane-based organic silicon polymer compounds, specific examples of which include polydimethylsiloxane and γ-glycidoxypropyltrimethoxysilane. Moreover, a reinforced polymer electrolyte membrane, in which an ion exchange resin has been impregnated in an expanded porous polytetrafluoroethylene membrane, that is a GORE-SELECT (registered trademark) membrane, (Japan Gore-Tex), can be preferably used as a polymer electrolyte membrane. Previously listed examples of solvents or dispersants for preparing a solution or dispersion of an alkoxide of a transition element or rare earth element can be used as a solvent used in a solution of this polymer electrolyte membrane. In particular, the same solvent as the solvent or dispersant of the solution or dispersion of the alkoxide is preferably used.

According to the first aspect of the present invention, the solution or dispersion of the alkoxide is uniformly mixed with a solution of the polymer electrolyte. The mixing ratio is set so that the amount of the alkoxide of a transition element or a rare earth element to the amount of the material of the polymer electrolyte membrane is typically within the range of 0.05 to 80% by weight, preferably 0.1 to 50% by weight and more preferably 0.1 to 1% by weight. Since oxides formed from the alkoxide have low ion conductivity, if the amount of the alkoxide added exceeds 80% by weight, the ion conductivity of the polymer electrolyte membrane is inhibited, thereby making this undesirable. Conversely, if the amount of the alkoxide added is less than 0.05% by weight, the catalytic ability to decompose peroxides decreases thereby preventing the desired object from being attained. When mixing, adequate stirring is preferably carried out so that the transition element or rare earth element is uniformly dispersed in the polymer electrolyte. In addition, in the case the alkoxide reacts with moisture in the atmosphere, the mixing is preferably carried out in an inert atmosphere substantially free of moisture.

According to the first aspect of the present invention, a polymer electrolyte membrane is formed, in which a transition element or rare earth element is uniformly dispersed, from a solution mixed in the manner described above. There are no particular limitations on the method for forming the membrane provided it enables the formation of a polymer electrolyte membrane having a membrane thickness within the range of 5 to 50 µm and preferably 10 to 30 µm, and a membrane formation method such as reverse rolling, direct rolling or spraying may be used. In addition, examples of coaters used in a coating method include a reverse roll coater, direct roll coater, curtain coater, fountain counter, knife coater, die coater, gravure coater and micro gravure coater. In the case of using a support when forming the polymer electrolyte membrane, a release film is preferably used for the support since it promotes separation of the resulting polymer electrolyte membrane. There are no particular limitations on the material of the release film provided it is able to withstand the drying temperature of the polymer electrolyte membrane, examples of which include polyethylene terephthalate (PET), polyether ether ketone (PEEK), polyethylene naphthalate (PEN) and polyether sulfone (PES). In addition, separation between the polymer electrolyte membrane and the release film can also be enhanced by providing a fluorine-based or olefin-based surface coating on these film materials. Moreover, a reinforcing material such as a woven fabric, non-woven fabric, short fibers, porous film or porous base material can be combined with the polymer electrolyte membrane to enhance the mechanical strength of the polymer electrolyte membrane. Specific examples of such reinforcing materials include short glass fibers, short polyethylene terephthalate (PTFE) fibers and porous expanded polytetrafluoroethylene (PTFE) membrane. Following membrane formation, the solvent can be removed by drying treatment using a constant temperature bath or hot air dryer and the like to obtain a polymer electrolyte membrane. Drying may be carried out at a temperature of 100 to 200°C and preferably 120 to 180°C for about 2 to 60 minutes.

According to the first aspect of the present invention, when forming a polymer electrolyte membrane in which is uniformly dispersed a transition element or a rare earth element, the alkoxide is hydrolyzed and condensed. The term "when forming" means that the hydrolysis and condensation of the alkoxide begins from the time the solution or dispersion of the alkoxide and the solution of the polymer electrolyte are mixed, and that the hydrolysis/condensation reaction is able to continue during the formation of the polymer electrolyte membrane as well as after formation thereof depending on the case. The rate of the hydrolysis/condensation reaction differs depending on the type of alkoxide. In addition, the water content, temperature, pH and so forth in the mixed solution can also be adjusted to either delay or accelerate the alkoxide hydrolysis/condensation reaction so as not to have a detrimental effect on the formation step of the polymer electrolyte membrane.

According to the first aspect of the present invention, a peroxide-decomposing catalyst (oxide of a transition element or rare earth element) can be uniformly dispersed in a polymer electrolyte membrane at the nano level. Since the uniformly dispersed peroxide-decomposing catalyst does not affect polymer electrolyte anions contributing to hydrogen ion conductivity and a dispersion thereof forms a three-dimensional crosslinked structure, together with elimination of the peroxide-decomposing catalyst being inhibited, the mechanical stability and heat resistance of the polymer electrolyte membrane are improved.

A production process of a polymer electrolyte membrane for a solid polymer electrolyte fuel cell according to a second aspect of the present invention comprises a step for preparing a solution or dispersion of an alkoxide of a transition element or rare earth element having catalytic ability that decomposes peroxides, a step for preparing a polymer electrolyte membrane for a solid polymer electrolyte fuel cell, a step for uniformly permeating the solution or dispersion of the alkoxide in the polymer electrolyte membrane, and a step for forming a polymer electrolyte membrane in which the transition element or the rare earth element is uniformly dispersed by hydrolyzing and condensing the alkoxide.

The step for preparing a solution or dispersion of an alkoxide of a transition element or rare earth element having a catalytic ability that decomposes peroxides is as was previously explained with respect to the first aspect of the present invention.

According to the second aspect of the present invention, a solution or dispersion of an alkoxide prepared in the manner described above is uniformly permeated into the aforementioned polymer electrolyte membrane. The amount of the alkoxide to be permeated (amount added) is within the range of 0.05 to 80% by weight, preferably 0.1 to 50% by weight and more preferably 0.1 to 1% by weight based on the polymer electrolyte membrane. Since the alkoxide of a transition element or rare earth element has low ion conductivity, if the amount of the alkoxide added exceeds 80% by weight, the ion conductivity of the polymer electrolyte membrane is inhibited, thereby making this undesirable. Conversely, if the amount of the alkoxide added is less than 0.05% by weight, the catalytic ability of decomposing peroxides decreases, thereby preventing the desired object from being attained.

An alkoxide of phosphorous such as diisopropyl phosphite or a phosphorous compound such as phosphoric acid may be added to the solution or dispersion of the alkoxide of a transition element or rare earth element in order to enhance the ion conductivity of the polymer electrolyte membrane. Since deterioration of the polymer electrolyte membrane is inhibited and water absorption of the polymer electrolyte membrane is enhanced due to the presence of a phosphoric acid group on the end of the three-dimensional crosslinked structure formed following a hydrolysis/condensation reaction to be described later, drying is inhibited even during power generation under low humidification conditions, thereby making it possible to maintain a high voltage. The amount added of the alkoxide or phosphorous compound to be permeated into the polymer electrolyte membrane is within the range of 0.01 to 10 times moles and preferably 0.5 to 2 times moles based on the alkoxide of a transition element or rare earth element. In addition, the effect of enhancing ion conductivity of the polymer electrolyte membrane can also be obtained by adding a mercapto group- containing compound such as γ-mercaptopropylmethoxysilane after having converted the mercapto group to a sulfonic acid group.

Permeation of the solution or dispersion of the alkoxide into the polymer electrolyte membrane can be carried out by immersing the polymer electrolyte membrane in the solution or dispersion. Although varying according to the thickness and material of the polymer electrolyte membrane, the immersion time is at least 5 hours and preferably 10 hours or more in order to achieve uniform permeation throughout the entire polymer electrolyte membrane. In addition, the alkoxide solution or dispersion is preferably heated to room temperature or higher, preferably to approximately 100°C or lower and more preferably to 80°C or lower during immersion in order to shorten the immersion time. Moreover, the polymer electrolyte membrane may be swollen in advance to promote permeation of the alkoxide solution or dispersion. Examples of swelling liquids that can be used include water and lower alcohols such as methanol or ethanol, and may be the same or different from the solvent or dispersant used to prepare the alkoxide solution or dispersion. Conversely, in the case it is desirable to limit permeation of the alkoxide solution or dispersion to only the proximity of the surface of the polymer electrolyte membrane, the polymer electrolyte membrane can be immersed in the alkoxide solution or dispersion without swelling the polymer electrolyte membrane or in a state in which swelling has been inhibited.

According to the second aspect of the present invention, an alkoxide of a transition element or a rare earth element that has been uniformly permeated into a polymer electrolyte membrane is hydrolyzed and condensed. The hydrolysis/ condensation reaction begins from the time a solution or dispersion of the alkoxide of a transition metal or rare earth metal contacts the polymer electrolyte membrane. Protons released from ion exchange groups of the polymer electrolyte membrane and water contained in the polymer electrolyte membrane are involved in this hydrolysis/condensation reaction. Thus, by swelling the polymer electrolyte membrane with water in advance, the hydrolysis/condensation reaction within the membrane can be promoted. Moreover, the hydrolysis/ condensation reaction can also be promoted by contacting or immersing the polymer electrolyte membrane in water or an aqueous solution after having contacted or immersed in the solution or dispersion of the alkoxide.

A peroxide-decomposing catalyst can be uniformly dispersed in the polymer electrolyte membrane at the nano level by hydrolyzing and condensing the alkoxide of a transition element or rare earth element that has been uniformly permeated into the polymer electrolyte membrane. Since the uniformly dispersed peroxide-decomposing catalyst is in the form of an oxide, a portion or all of the polymer electrolyte anions are not subjected to ion exchange, thereby preventing the catalyst from having an effect on hydrogen ion conduction. Thus, peroxides such as H₂O₂ formed in an electrode layer can be rapidly decomposed without impairing the power generation performance of a solid polymer electrolyte fuel cell. In addition, since a dispersion of the peroxide-decomposing catalyst forms a three-dimensional crosslinked structure as a result of the alkoxide hydrolysis/condensation reaction, elimination of the peroxide-decomposing catalyst from the polymer electrolyte membrane is inhibited. Moreover, this three-dimensional crosslinked structure also contributes to improvement of mechanical strength and heat resistance of the polymer electrolyte membrane.

A laminated membrane of two or more layers can also be formed by combining a polymer electrolyte membrane not containing a transition element or rare earth element with the polymer electrolyte membrane containing such elements obtained according to the process of the present invention. As previously described, since a side reaction in the form of a reduction reaction of oxygen that occurs at the cathode of a solid polymer electrolyte fuel cell proceeds through hydrogen peroxide (H₂O₂), the polymer electrolyte membrane adjacent to a cathode electrode layer is susceptible to deterioration by hydrogen peroxide or peroxide radicals formed in the cathode electrode layer. In this case, by arranging the laminated membrane described above so that the polymer electrolyte membrane containing a transition element or rare earth element is in close proximity to the cathode electrode layer, the curability of the polymer electrolyte membrane of a solid polymer electrolyte fuel cell can be adequately enhanced. In addition, in the case hydrogen peroxide or peroxide radicals are formed in the anode electrode layer due to a crossover phenomenon and the like, the aforementioned laminated membrane is arranged so that the polymer electrolyte membrane containing a transition element or rare earth element is in close proximity to the anode electrode layer. Moreover, by using a three-layer laminated membrane in which the polymer electrolyte membrane containing a transition element or rare earth element obtained according to the process of the present invention is combined on both sides of a polymer electrolyte membrane not containing such elements, peroxides formed in both the cathode electrode layer and anode electrode layer can be effectively decomposed. There are no particular limitations on the method used to form such laminated membranes, and a method such as lamination, coating or spraying can be suitably employed.

A laminated membrane having two or more layers can also be formed by combining a layer containing a catalyst capable of oxidizing hydrogen on the cathode side of the polymer electrolyte membrane containing a transition element or rare earth element obtained according to the process of the present invention. By combining a layer containing a catalyst capable of oxidizing hydrogen on the cathode side, hydrogen that has crossed over the polymer electrolyte membrane from the anode side is oxidized and converted to water, thereby realizing self-supply of water required for moistening the polymer electrolyte membrane. In addition, decreases in cell voltage can also be prevented by inhibiting hydrogen crossover. Examples of catalysts able to oxidize hydrogen include metal-loaded carbon catalysts in which at least one type of metal selected from the group consisting of platinum, gold, palladium, rhodium, iridium and ruthenium is loaded onto carbon powder or fibers. A layer containing the metal-loaded carbon catalyst can be prepared by adding the metal-loaded carbon catalyst to the aforementioned polymer electrolyte membrane. The amount of the metal-loaded carbon catalyst added is within the range of 0.01 to 80% by weight based on the polymer electrolyte membrane. The metal-loaded carbon catalyst may be added to the polymer electrolyte membrane containing a peroxide-decomposing catalyst (transition element or rare earth element) according to the present invention, or may be added to a different polymer electrolyte membrane independent of the polymer electrolyte membrane containing the peroxide-decomposing catalyst. In the case of the latter, either the polymer electrolyte membrane containing the peroxide-decomposing catalyst or the polymer electrolyte membrane containing the metal-loaded carbon catalyst may be arranged in close proximity to the cathode electrode layer. Japanese Unexamined Patent Publication No. H7-90111 may be referred to for details regarding layers containing a catalyst capable of oxidizing hydrogen that demonstrate crossover preventive effects.

The polymer electrolyte membrane containing a transition element or rare earth element obtained according to the process of the present invention contains catalyst particles for acting as an electrode layer of a solid polymer electrolyte fuel cell. By using this type of polymer electrolyte membrane containing catalyst particles as the electrode layer of the cathode and/or anode, peroxides generated in the electrode layer can be instantaneously decomposed at that site, thereby preventing deterioration of the polymer electrolyte used in the electrode layer. The catalyst particles are those having catalytic action on a hydrogen oxidation reaction or oxygen reduction reaction, and examples of which that can be used include platinum, ruthenium, iridium, cobalt, iron, chromium, nickel and alloys thereof, such as platinum-ruthenium alloy, platinum-iridium alloy or platinum-cobalt alloy. The catalyst particles are normally used by loading onto an electrically conductive material. Preferable examples of electrically conductive materials include carbon-based particles such as carbon black, activated charcoal or graphite, and are preferably used in the form of finely powdered particles in particular. Typically, precious metal particles such as Pt particles or alloy particles of Pt and other metals are loaded onto carbon black particles having a surface area of 20 m²/g or more. With respect to anode catalysts in particular, since Pt is susceptible to poisoning by carbon monoxide (CO), in the case of using a fuel containing CO in the manner of methanol, alloy particles of Pt and ruthenium (Ru) are used preferably. The electrode layer is preferably porous to enable as much fuel gas such as hydrogen or methanol on the anode side and as much oxidant gas such as oxygen or air on the cathode side as possible to make contact with the catalyst. In addition, the amount of catalyst contained in the electrode layer is preferably within the range of 0.01 to 1 mg/cm² and more preferably 0.1 to 0.6 mg/cm². The thickness of the electrode layer is typically 1 to 20 µm and preferably 5 to 15 µm.

A membrane electrode assembly for a solid polymer electrolyte fuel cell can be formed by combining the polymer electrolyte membrane obtained according to the present invention with an electrode layer. In general, this type of membrane electrode assembly further includes a gas diffusion layer. The gas diffusion layer consists of a material having electrical conductivity and gas permeability. Typical examples of such materials include carbon paper, carbon woven fabric, carbon non-woven fabric, carbon felt and other materials obtained by carrying out water repellency treatment on a gas-permeable, electrically conductive base material. In addition, a porous sheet obtained from carbon-based particles and a fluorine-based resin can also be used. For example, a porous sheet obtained by forming carbon black into a sheet while using polytetrafluoroethylene as a binder can be used. The thickness of the gas diffusion layer is typically within the range of 50 to 500 µm and preferably 100 to 200 µm.

According to the present invention, the peroxide-decomposing catalyst described above can be contained in a polymer electrolyte membrane, at least one of the electrode layers or both. When forming the membrane electrode assembly, any known method in the prior art can be employed provided dense bonding having low contact resistance is achieved without impairing the polymer electrolyte membrane. In general, after first forming an anode electrode layer or cathode electrode layer by combining an electrode layer and a gas diffusion layer, they can be bonded to a polymer electrolyte membrane. For example, an anode electrode layer or a cathode electrode layer can be formed by preparing a coating solution for electrode layer formation containing catalyst particles and ion exchange resin using a suitable solvent and then coating onto a sheet material for a gas diffusion layer, followed by bonding these to the polymer electrolyte membrane with a hot press. In addition, an electrode layer may be combined with the polymer electrolyte membrane followed by combining the gas diffusion layer on the side of the electrode layer. When combining the electrode layer and the polymer electrolyte membrane, a conventionally known method may be employed such as screen prinking, spray coating or decaling.

A solid polymer electrolyte fuel cell stack can be assembled by alternately laminating 10 to 100 membrane electrode assemblies obtained in the manner described above with a separator plate and cooling portion so that the anode sides and cathode sides thereof are on prescribed sides. In addition, the polymer electrolyte membrane according to the present invention and an electrode layer comprising catalyst particles in the polymer electrolyte membrane can also be used in a so-called direct methanol type of fuel cell using methanol for fuel.

### Examples

The following provides a more detailed explanation of the present invention through examples thereof.

### Example 1 (Membrane Formation Method)

### Preparation of Polymer Electrolyte Membrane and Evaluation Thereof

1.1 g of triisopropoxycerium (Ce(O-i-C₃H₇)₃) were added to 27.8 g of ethanol in a dry argon atmosphere inside a dry box followed by stirring and dispersing with a stirrer to prepare a dispersion for use as a solution of an alkoxide of a rare earth element having catalytic ability that decomposes peroxides so that the cerium (Ce) content was 1% by weight based on the polymer electrolyte membrane (1.9% by weight of Ce alkoxide based on the material of the polymer electrolyte membrane). 50 g of a sulfonic acid group-containing perfluorocarbon copolymer (CF₂=CF₂/CF₂=CFOCF₂CF(CF₃)O(CF)₂SO₃H copolymer; ion exchange capacity: 1.25 milliequivalents/g) were prepared for use as a polymer electrolyte, and this was dissolved in 50 g of distilled water and 150 g of ethanol to prepare a polymer electrolyte solution (solid fraction concentration: 20% by weight). Next, 28.9 g of the alkoxide dispersion and 250 g of the polymer electrolyte solution were mixed at room temperature followed by adequately stirring to uniformity with a stirrer. The resulting mixed dispersion was coated onto a release film (ethylene- tetrafluoroethylene copolymer (ETFE) film) using a coating method. Next, a porous expanded PTFE membrane having a thickness of 10 µm (Japan Gore-Tex, porosity: 70%, mean pore diameter: 0.2 µm, tensile strength: 30 MPa, mass weight: 6.5 g/m²) was contacted on the coated film (dispersion) in the form of a reinforcing material to produce an impregnated membrane in which the dispersion was impregnated in the porous expanded PTFE membrane. Next, the resulting impregnated membrane was heat-treated (140°C, 5 minutes) in a constant temperature bath to obtain a polymer electrolyte membrane having a thickness of 20 µm reinforced with a porous expanded PTFE membrane.

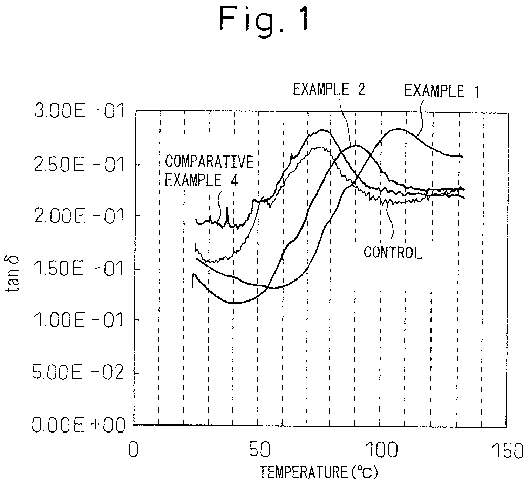

Dynamic viscoelastic behavior of the polymer electrolyte membrane was measured in the manner described below. The resulting polymer electrolyte membrane was die cut to a width of 10 mm parallel to the MD direction. The RSII manufactured by Rheometric Scientific Inc. was used to measure dynamic viscoelastic behavior. Evaluation conditions consisted of a sample length of 22.7 mm, width of 10 mm, temperature of 25 to 150°C, heating rate of 2°C/min, frequency of 1 Hz, and using the glass transition temperature (Tg) for the peak value of tanδ. The dynamic viscoelastic behavior of the aforementioned polymer electrolyte membrane is shown in FIG. 1.

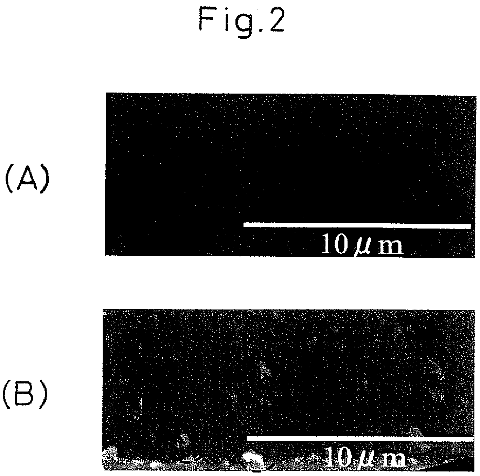

In addition, dispersibility of Ce in the polymer electrolyte membrane was evaluated in the manner described below. The resulting polymer electrolyte membrane was cut in an arbitrary plane, gold was sputtered onto the resulting cross-section, and fine particles of Ce oxide were subsequently observed with a scanning electron microscope (SEM). The SEM micrograph is shown in FIG. 2A.

### Preparation of Membrane Electrode Assembly (MEA) and Evaluation Thereof

The polymer electrolyte membrane described above was cut out to a size of 10 cm x 10 cm, and a PRIMEA 5580 electrode layer (5 cm x 5 cm, Primea (registered trademark), Japan Gore-Tex) was arranged on both sides thereof. Next, each electrode layer was transferred to the polymer electrolyte membrane by hot pressing (130°C, 6 minutes) to produce a membrane electrode assembly (MEA) composed of an anode electrode layer, the polymer electrolyte membrane and a cathode electrode layer.

This MEA was then positioned between two gas diffusion layers measuring 52 mm x 52 mm and composed of CNW10A (Carbell (registered trademark), Japan Gore-Tex) followed by incorporating in a power generation cell and carrying out accelerated testing in the form of an open circuit voltage test (OCV test). The OCV test was carried out at normal pressure, and hydrogen and air were supplied to the anode side and cathode side, respectively, at a flow rate of 0.5 L/min. The cell temperature was set to 90°C, the dew points of the anode gas and cathode gas were respectively set to 63°C, the cell was operated for 200 hours in the open circuit state without generating power, and the change in voltage during that time was measured. In addition, the degree of deterioration of the polymer electrolyte membrane was compared by measuring fluorine ion concentration in the discharged water at the start of operation and immediately prior to completion of operation. More specifically, discharged water from a gas discharge port in the cell was trapped for 10 hours from both the anode side and cathode side immediately after the start of the OCV test and after the passage of 200 hours, discharged water for measurement of fluorine ion concentration was sampled, and fluorine ion concentration was measured by applying the sample to ion chromatography (DX-320, Nippon Dionex). The measurement results are shown in Table 1.

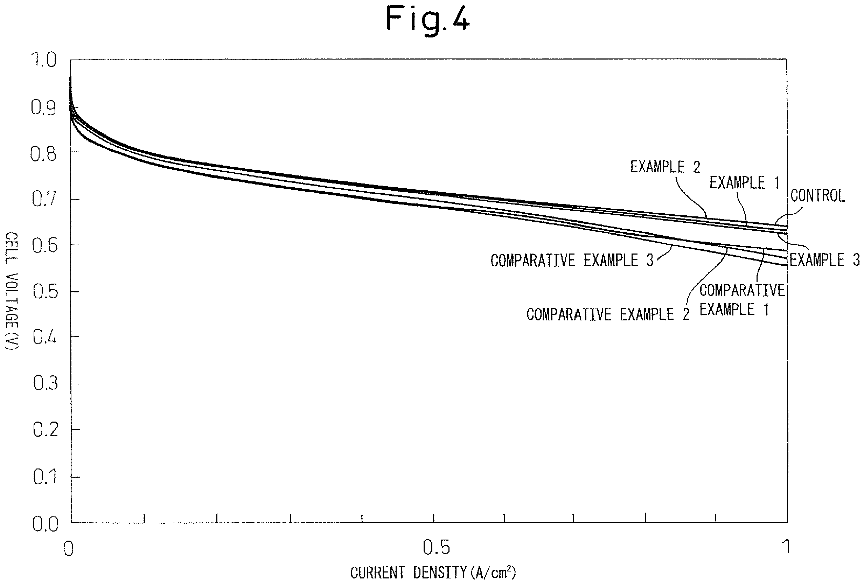

In addition, the power generation performance of the polymer electrode membrane of this example was measured, and those results are shown in FIG. 4. Power generation performance was measured by supplying hydrogen (utilization factor: 80%) and air (utilization factor: 40%) to the anode side and cathode side, respectively. At that time, the cell temperature, anode dew point and cathode dew point were each set to 80°C. In addition, the supplied hydrogen and air were each humidified.

### Example 2 (Membrane Formation Method)

The same procedure as Example 1 was repeated with the exception of adding 0.5 g of triisopropoxycerium (Ce(O-i-C₃H₇)₃) so that the cerium (Ce) content was 0.4% by weight based on the polymer electrolyte (0.8% by weight of Ce alkoxide based on the material of the polymer electrolyte membrane). The dynamic viscoelastic behavior of the resulting polymer electrolyte membrane is shown in FIG. 1.

In addition, an MEA was produced and OCV testing was carried out in the same manner as Example 1 followed by measurement of fluorine ion concentration. The measurement results are shown in Table 1. Moreover, power generation performance was also measured in the same manner as Example 1, and those results are shown in FIG. 4.

### Example 3 (Membrane Formation Method)

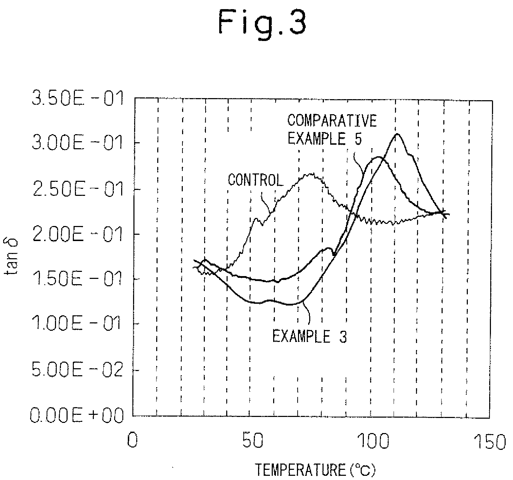

The same procedure as Example 1 was repeated with the exception of adding 1.6 g of diisopropoxymanganese (Mn (O-i-C₃H₇)₂) instead of 1.1 g of triisopropoxycerium (Ce(O-i-C₃H₇)₃) so that the Mn content was 1% by weight based on the polymer electrolyte (2.7% by weight of Mn alkoxide based on the material of the polymer electrolyte membrane). The dynamic viscoelastic behavior of the resulting polymer electrolyte membrane is shown in FIG. 3.

In addition, an MEA was produced and OCV testing was carried out in the same manner as Example 1 followed by measurement of fluorine ion concentration. The measurement results are shown in Table 1. Moreover, power generation performance was also measured in the same manner as Example 1, and those results are shown in FIG. 4.

### Comparative Example 1 (immersion Method)

3.3 mg of cerium nitrate (Ce(NO₃)₃·6H₂O) were dissolved in 100 g of distilled water to prepare a solution for use as a solution of a salt of a rare earth element having catalytic ability that decomposes peroxides. A polymer electrolyte membrane was prepared by cutting out a sulfonic acid group-containing perfluorocarbon copolymer-based electrolyte membrane (GORE-SELECT (registered trademark), Japan Gore-Tex) having a thickness of 20 µm to the shape of a square measuring 8 cm x 8 cm. The polymer electrolyte membrane was then immersed in the salt solution and the salt solution was stirred with a stirrer for 50 hours at room temperature to incorporate the cerium ions in the polymer electrolyte membrane. Subsequently, the polymer electrolyte membrane was removed from the solution, placed between filter paper and allowed to air-dry for 1 day. 98 to 99% of the cerium ions were confirmed to have been incorporated in the electrolyte film based on measurement by inductively coupled plasma emission spectrometry (ICP emission spectrometry) before and after immersion of the polymer electrolyte membrane in the aqueous cerium nitrate solution. Accordingly, the Ce content of the polymer electrolyte membrane obtained in Comparative Example 1 was 0.5% by weight based on the polymer electrolyte.

An MEA was produced and OCV testing was carried out in the same manner as Example 1 followed by measurement of fluorine ion concentration. The measurement results are shown in Table 1. Moreover, power generation performance was also measured in the same manner as Example 1, and those results are shown in FIG. 4.

### Comparative Example 2 (Immersion Method)

The same procedure as Comparative Example 1 was repeated with the exception of dissolving 10 mg of cerium nitrate (Ce (NO₃)₃-6H₂O) in 100 g of distilled water so that the Ce content of the polymer electrolyte membrane was 1.5% by weight based on the polymer electrolyte.

An MEA was produced and OCV testing was carried out in the same manner as Example 1 followed by measurement of fluorine ion concentration. The measurement results are shown in Table 1. Moreover, power generation performance was also measured in the same manner as Example 1, and those results are shown in FIG. 4.

### Comparative Example 3 (Immersion Method)

The same procedure as Comparative Example 1 was repeated with the exception of dissolving 11.2 mg of manganese nitrate Mn(NO₃)₂ in 100 g of distilled water so that the Mn content of the polymer electrolyte membrane was 1.0% by weight based on the polymer electrolyte.

An MEA was produced and OCV testing was carried out in the same manner as Example 1 followed by measurement of fluorine ion concentration. The measurement results are shown in Table 1. Moreover, power generation performance was also measured in the same manner as Example 1, and those results are shown in FIG. 4.

### Comparative Example 4 (Membrane Formation Method)

50 g of a sulfonic acid group-containing perfluorocarbon copolymer (CF₂=CF₂/CF₂= CFOCF₂CE(CF₃)O(CF₂)₂SO₃H copolymer; ion exchange capacity: 1.25 milliequivalents/g) were prepared for use as a polymer electrolyte, and this was dissolved in 50 g of distilled water and 150 g of ethanol to prepare a polymer electrolyte solution (solid fraction concentration: 20% by weight). Next, 0.6 g of a fine powder (mean particle diameter: 0.2 µm) of cerium oxide (CeO₂ were added to the polymer electrolyte solution so that the Ce content was 1% by weight based on the polymer electrolyte followed by stirring and pulverizing using a Silverson Mixer (L4RT, Silverson) and a high-pressure disperser (PRE03-15, Genus) to prepare a dispersion. A membrane was formed in the same manner as Example 1 using the resulting dispersion to obtain a polymer electrolyte membrane having a thickness of 20 µm.

The dynamic viscoelastic behavior of the polymer electrolyte membrane was measured in the same manner as Example 1, and those results are shown in FIG. 1. In addition, dispersibility of the Ce in the polymer electrolyte membrane was evaluated in the same manner as Example 1, and an SEM micrograph thereof is shown in FIG. 2B. Moreover, an MEA was produced and OCV testing was carried out in the same manner as Example 1 followed by measurement of fluorine ion concentration. The measurement results are shown in Table 1.

### Comparative Example 5 (Membrane Formation Method)

The same procedure as Comparative Example 4 was repeated with the exception of adding 0.8 g of a fine powder (particle diameter: 1 to 10 µm) of manganese oxide (MnO₂) instead of the fine powder (mean particle diameter: 0.2 µm) of cerium oxide (CeO₂) so that the Mn content was 1% by weight based on the polymer electrolyte. The dynamic viscoelastic behavior of the resulting polymer electrolyte membrane is shown in FIG. 3. Moreover, an MEA was produced and OCV testing was carried out in the same manner as Example 1 followed by measurement of fluorine ion concentration. The measurement results are shown in Table 1 below.

**Table 1**

| | Open circuit voltage (V) | | F ion amount (µg/hr) | |
|---|---|---|---|---|
| | Initially | After 200 hrs | Initially | After 200 hrs |
| Control | 0.93 | 0.85 | 15.6 | 31.3 |
| Example 1 | 0.98 | 0.97 | 0.05 | 0.05 |
| Example 2 | 0.95 | 0.94 | 0.10 | 0.08 |
| Example 3 | 0.95 | 0.94 | 0.11 | 0.07 |
| Comp. Ex. 1 | 0.93 | 0.92 | 0.32 | 0.43 |
| Comp. Ex. 2 | 0.93 | 0.92 | 0.25 | 0.23 |
| Comp. Ex. 3 | 0.94 | 0.93 | 0.18 | 0.23 |
| Comp. Ex. 4 | 0.94 | 0.93 | 0.07 | 0.07 |
| Comp. Ex. 5 | 0.91 | 0.89 | 0.25 | 0.29 |

In Table 1, a sulfonic acid group-containing perfluorocarbon copolymer (GORE-SELECT (registered trademark), Japan Gore-Tex) having a thickness of 20 µm was used for the polymer electrolyte membrane of the control, and did not contain a peroxide-decomposing catalyst or catalyst that oxidizes hydrogen (Pt/C). In Examples 1 to 3, as a result of containing cerium (Ce) or manganese (Mn) in the polymer electrolyte membrane, the open circuit voltage hardly changed at all even after 200 hours, and decreases in voltage were inhibited considerably as compared with the control that did not contain these elements. In addition, with respect to fluorine ion levels in discharged water as well, fluorine ion levels decreased considerably in Examples 1 to 3 as compared with the control both initially and after 200 hours of operation. In Comparative Examples 1 to 3, in which Ce or Mn was incorporated in the polymer electrolyte membrane in ionic form, although decreases in voltage were similar to those in Examples 1 to 3, fluorine ion concentrations in discharged water increased beyond the levels in the examples. In addition, as shown in FIG. 4, power generation performance for Comparative Examples 1 to 3 decreased as compared with the examples and the control. The decreases in power generation performance are thought to be the result of a decrease in hydrogen ion conductivity in the polymer electrolyte membrane due to ion exchange between Ce ions or Mn ions and a portion of the sulfonic acid groups of the polymer electrolyte membrane. This is also supported by the absence of any decrease in power generation performance for Comparative Examples 4 and 5, in which Ce or Mn was incorporated in the polymer electrolyte membrane in the form of an oxide powder, as compared with the examples and control (not shown). Although Comparative Examples 4 and 5 are similar to Examples 1 to 3 with respect to voltage decreases, fluorine ion levels in discharged water increased beyond the levels of Example 3, in which Mn was incorporated in the form of an alkoxide, particularly in Comparative Example 5, in which Mn was incorporated in the form of oxide powder. FIG. 2 shows SEM micrographs of membrane cross-sections of Example 1, in which Ce was incorporated in the form of an alkoxide, and Comparative Example 4, in which Ce was incorporated in the form of an oxide powder. Based on the SEM micrograph of the polymer electrolyte membrane according to Example 1 (FIG. 2A), Ce can be seen to be uniformly dispersed at the nano level. On the other hand, in the SEM micrograph of the polymer electrolyte membrane according to Comparative Example 4 (FIG. 2B), particulate matter having a size of about 1 to 2 µm (encircled with broken lines) is observed, and the added CeO₂ (mean particle diameter: 0.2 µm can be seen to be aggregated. FIGS. 1 and 3 indicate the dynamic viscoelastic behavior of polymer electrolyte membranes in which Ce and Mn were added in the form of an alkoxide or oxide. In all cases, the glass transition temperatures (peak temperature) of polymer electrolyte membranes in which Ce or Mn was added in the form of an alkoxide increased. This is thought to be the result of the formation of a three-dimensional crosslinked structure within the polymer electrolyte membrane due to the Ce or Mn alkoxide having been hydrolyzed and condensed.

### Example 4 (System Containing Pt/C Catalyst)

1.6 g of diisopropoxymanganese (Mn(O-i-C3H7)2) were added to 27.8 g of ethanol in a dry argon atmosphere inside a dry box followed by stirring and dispersing with a stirrer to prepare a dispersion for use as a solution of an alkoxide of a rare earth element having catalytic ability that decomposes peroxides. 50 g of a sulfonic acid group-containing perfluorocarbon copolymer (CF₂=CF₂/CF₂=CFOCF₂CF(CF₃)O(CF₂)₂SO₃H copolymer; ion exchange capacity: 1.25 milliequivalents/g) were prepared for use as a polymer electrolyte, and this was dissolved in 50 g of distilled water and 150 g of ethanol to prepare a polymer electrolyte solution (solid fraction concentration: 20% by weight). Next, 29.4 g of the alkoxide dispersion and 250 g of the polymer electrolyte solution were mixed at room temperature followed by adequately stirring to uniformity with a stirrer to prepare a mixed dispersion. Moreover, 16.9 g of carbon black (TEC10E50E, Tanaka Kikinzoku Kogyo) loaded with 50% by weight of platinum for use as a catalyst capable of oxidizing hydrogen (Pt/C) were added to this mixed dispersion to prepare a Pt/C-containing mixed dispersion. The polymer electrolyte solution was coated onto a release film (ethylene- tetrafluoroethylene copolymer (ETFE) film) by a coating method. Next, a porous expanded PTFE membrane having a thickness of 10 µm (Japan Gore-Tex, porosity: 70%, mean pore diameter: 0.2 µm, tensile strength: 30 MPa, mass weight: 6.5 g/m²) was contacted on the coated film (dispersion) in the form of a reinforcing material to produce an impregnated membrane in which the dispersion was impregnated in the porous expanded PTFE membrane. Moreover, the Pt/C-containing mixed dispersion was similarly coated to a thickness of 4 µm onto the impregnated membrane followed by finally similarly coating the polymer electrolyte solution to a thickness of 3 µm. Next, the resulting membrane was heat-treated (140°C, 5 minutes) in a constant temperature bath to obtain a three-layered polymer electrolyte membrane having a total thickness of 20 µm and an Mn content of 0.2% by weight based on the polymer electrolyte (0.5% by weight of Mn alkoxide based on the material of the polymer electrolyte membrane).

In addition, an MEA was produced and OCV testing was carried out in the same manner as Example 1 followed by measurement of fluorine ion concentration. At that time, a configuration was employed in which a polymer electrolyte membrane having a thickness of 2 µm was used on the cathode side, and the Pt/C catalyst was biased toward the cathode. The measurement results are shown in Table 2.

### Comparative Example 6 (System Containing Pt/C Catalyst)

The same procedure as Example 4 was repeated with the exception of not adding an alkoxide of a rare earth element. An MEA (in which the Pt/C catalyst was biased toward the cathode) was produced and OCV testing was carried out in the same manner as Example 4 followed by measurement of fluorine ion concentration. The measurement results are shown in Table 2 below.

**Table 2**

| | Open circuit voltage (V) | | F ion amount (µg/hr) | |
|---|---|---|---|---|
| | Initially | After 200 hrs | Initially | After 200 hrs |
| Control | 0.93 | 0.85 | 15.6 | 31.3 |
| Example 3 | 0.95 | 0.94 | 0.11 | 0.07 |
| Example 4 | 1.04 | 1.03 | 0.16 | 0.16 |
| Comp. Ex. 6 | 1.05 | 1.01 | 0.47 | 1.84 |

In Table 2, the control and Example 3 are the same as the control and Example 3 of Table 1, respectively. Comparative Example 6 demonstrated higher open circuit voltages as a result of containing Pt/C in the polymer electrolyte membrane as a catalyst capable of oxidizing hydrogen. This was the result of the conversion of hydrogen, which crossed over the polymer electrolyte membrane from the anode side, to water due to the oxidation thereof. Although Example 4 is a system in which Pt/C is further added to Example 3, together with inhibiting crossover in the same manner as Comparative Example 6, decomposition of the polymer electrolyte was determined to be inhibited by the peroxide-decomposing catalytic action of Mn based on the reduction in the discharged amount of fluorine ions.

### INDUSTRIAL APPLICABILITY

According to the present invention, a peroxide-decomposing catalyst can be uniformly dissolved at the nano level in a polymer electrolyte membrane by using a solution or dispersion of an alkoxide of a transition metal or rare earth metal having catalytic ability that decomposes peroxides. The uniformly dispersed peroxide-decomposing catalyst is able to rapidly decompose peroxides formed in an electrode layer without impairing power generation performance due to ion exchange with polymer electrolyte anions. In addition, since a polymer electrolyte membrane in which the peroxide-decomposing catalyst is uniformly dispersed at the nano level is nearly completely free of surface irregularities in the membrane surface, adhesion to the electrode layer during subsequent production of a membrane electrode assembly (MEA) is favorable, and mechanical damage (such as the formation of cracks) of the electrode layer attributable to such surface irregularities is reduced. Moreover, since a dispersion of the peroxide- decomposing catalyst forms a three-dimensional crosslinked structure due to a hydrolysis/condensation reaction of the alkoxide, elimination of the peroxide-decomposing catalyst from the polymer electrolyte membrane is inhibited. In addition, this three-dimensional crosslinked structure also contributes to improvement of mechanical stability and heat resistance of the polymer electrolyte membrane. As a result of these actions and effects, the solid polymer electrolyte fuel cell according to the present invention demonstrates drastically improved curability as a result of inhibiting deterioration of the polymer electrolyte membrane.

## Claims

1. A production process of a polymer electrolyte membrane for a solid polymer electrolyte fuel cell, comprising the steps of:
preparing a solution or dispersion of an alkoxide of a transition element or a rare earth element having catalytic ability that decomposes peroxides,
preparing a solution of a polymer electrolyte for a solid polymer electrolyte fuel cell,
uniformly mixing the solution or dispersion of the alkoxide with the solution of the polymer electrolyte, and
hydrolyzing and condensing the alkoxide when forming a polymer electrolyte membrane in which the transition element or the rare earth element is uniformly dispersed from the mixed solution,
wherein the material of the polymer electrolyte membrane contains a fluorine-based polymer compound, **characterized in that**
wherein the transition element or the rare earth element is at least one type selected from the group consisting of cerium, manganese, tungsten, vanadium, neodymium, cobalt, chromium, molybdenum and iron.

2. The production process according to claim 1, wherein the material of the polymer electrolyte membrane contains a combination of a fluorine-based polymer compound and a non-fluorine-based polymer compound.

3. The production process according to any of claims 1 to 2, wherein the material of the polymer electrolyte membrane contains a polymer compound having a sulfonic acid group.

4. The production process according to any of claims 1 to 3, wherein the added amount of the alkoxide is within the range of 0.05 to 80% by weight based on the material of the polymer electrolyte membrane.

5. The production process according to any of claims 1 to 4, wherein an alkoxide of phosphorous or a phosphorous compound is further added to the solution or dispersion of the alkoxide.

6. The production process according to any of claims 1 to 5, further comprising a step in which a laminated membrane having two or more layers is formed by combining a polymer electrolyte membrane not containing the transition element or the rare earth element.

7. The production process according to any of claims 1 to 6, further comprising a step in which a laminated membrane having two or more layers is formed by combining a layer containing a catalyst able to oxidize hydrogen on the cathode side.

8. The production process according to claim 7, wherein the catalyst able to oxidize hydrogen is a metal-loaded carbon catalyst.

9. The production process according to any of claims 1 to 5, wherein the polymer electrolyte membrane contains catalyst particles for acting as an electrode layer of a solid polymer electrolyte fuel cell.

10. A membrane electrode assembly for a solid polymer electrolyte fuel cell, comprising: a polymer electrolyte membrane for a solid polymer electrolyte fuel cell, obtained according to the production process described in any of claims 1 to 8, and an electrolyte layer.

11. A membrane electrode assembly for a solid polymer electrolyte fuel cell, comprising: the polymer electrolyte membrane for a polymer electrolyte fuel cell obtained according to the production process according to claim 9 as at least one of the electrode layers.

12. A solid polymer electrolyte fuel cell, comprising: the membrane electrode assembly according to claim 10 or 11.

## Patentansprüche

1. Herstellungsverfahren für eine Polymerelektrolytmembran für eine feste Polymerelektrolyt-Brennstoffzelle, umfassend die Schritte des:
Vorbereitens einer Lösung oder Dispersion eines Alkoxids oder eines Übergangselements oder eines Seltenerdelements, das Katalysatorfähigkeit aufweist, die Peroxide zersetzt,
Vorbereitens einer Lösung eines Polymerelektrolyts für eine feste Polymerelektrolyt-Brennstoffzelle,
gleichmäßigen Vermischens der Lösung oder Dispersion des Alkoxids mit der Lösung des Polymerelektrolyts, und
Hydrolysierens und Kondensierens des Alkoxids, wenn eine Polymerelektrolytmembran gebildet wird, in welcher das Übergangselement oder das Seltenerdelement gleichmäßig von der gemischten Lösung verteilt wird,
wobei das Material der Polymerelektrolytmembran eine Fluor-basierte Polymerverbindung ist,
**dadurch gekennzeichnet, dass** das Übergangselement oder das Seltenerdelement zumindest ein Typ ausgewählt aus der Gruppe bestehend aus Cer, Mangan, Wolfram, Vanadium, Neodym, Kobalt, Chrom, Molybdän und Eisen ist.

2. Herstellungsverfahren nach Anspruch 1, wobei das Material der Polymerelektrolytmembran eine Kombination aus einer Fluor-basierten Polymerverbindung und einer nicht Fluor-basierten Polymerverbindung enthält.

3. Herstellungsverfahren nach einem der Ansprüche 1 bis 2, wobei das Material der Polymerelektrolytmembran eine Polymerverbindung enthält, die eine Sulfonsäuregruppe aufweist.

4. Herstellungsverfahren nach einem der Ansprüche 1 bis 3, wobei die Zugabemenge des Alkoxids im Bereich von 0,05 bis,80 Gewichts-% basierend auf dem Material der Polymerelektrolytmembran ist.

5. Herstellungsverfahren nach einem der Ansprüche 1 bis 4, wobei ein Alkoxid von Phosphor oder eine Phosphorverbindung der Lösung oder Dispersion des Alkoxids weiter zugegeben wird.

6. Herstellungsverfahren nach einem der Ansprüche 1 bis 5, des Weiteren umfassend einen Schritt, in welchem eine laminierte Membran, die zwei oder mehrere Schichten aufweist, durch Kombinieren mit einer Polymerelektrolytmembran, die das Übergangselement oder das Seltenerdelement nicht enthält, gebildet wird.

7. Herstellungsverfahren nach einem der Ansprüche 1 bis 6, des Weiteren umfassend einen Schritt, in welchem eine laminierte Membran, die zwei oder mehrere Schichten aufweist, durch Kombinieren mit einer Schicht, die einen Katalysator enthält, der fähig ist, Wasserstoff auf der Kathodenseite zu oxidieren, gebildet wird.

8. Herstellungsverfahren nach Anspruch 7, wobei der Katalysator, der fähig ist, Wasserstoff zu oxidieren, ein Metall-beladener Kohlenstoffkatalysator ist.

9. Herstellungsverfahren nach einem der Ansprüche 1 bis 5, wobei die Polymerelektrolytmembran Katalysatorpartikel zum Agieren als eine Elektrodenschicht einer festen Polymerelektrolyt-Brennstoffzelle enthält.

10. Membranelektrodenanordnung für eine feste Polymerelektrolyt-Brennstoffzelle, umfassend: eine Polymerelektrolytmembran für eine feste Polymerelektrolyt-Brennstoffzelle, erhalten gemäß dem in einem der Ansprüche 1 bis 8 beschriebenen Herstellungsverfahren, und eine Elektrolytschicht.

11. Membranelektrodenanordnung für eine feste Polymerelektrolyt-Brennstoffzelle, umfassend: die Polymerelektrolytmembran für eine Polymerelektrolyt-Brennstoffzelle, erhalten gemäß dem Herstellungsverfahren nach Anspruch 9, und zumindest eine der Elektrodenschichten.

12. Feste Polymerelektrolyt-Brennstoffzelle, umfassend die Membranelektrodenanordnung nach Anspruch 10 oder 11.

## Revendications

1. Procédé de production d'une membrane électrolytique polymère destinée à une pile à combustible électrolytique polymère solide, comprenant les étapes consistant à :
préparer une solution ou une dispersion d'un alkoxyde d'un élément de transition ou d'un élément de terre rare présentant une aptitude catalytique qui décompose les peroxydes ;
préparer une solution d'un électrolyte polymère pour une pile à combustible électrolytique polymère solide ;
mélanger de manière uniforme la solution ou dispersion de l'alkoxyde avec la solution d'électrolyte polymère, et
hydrolyser et condenser l'alkoxyde lors de la formation d'une membrane électrolytique polymère dans laquelle l'élément de transition ou l'élément de terre rare sont dispersés de manière uniforme à partir de la solution mélangée ;
dans lequel la matière de la membrane électrolytique polymère contient un composé polymère à base de fluor,
**caractérisé en ce que**
dans lequel l'élément de transition ou l'élément de terre rare est d'au moins un type sélectionné parmi le groupe consistant en le cérium, le manganèse, le tungstène, le vanadium, le néodyme, le cobalt, le chrome, le molybdène, et le fer.

2. Procédé de production selon la revendication 1, dans lequel la matière de la membrane électrolytique polymère contient une combinaison reposant sur un composé polymère à base de fluor et un composé polymère sans fluor.

3. Procédé de production selon la revendication 1 ou 2, dans lequel la matière de la membrane électrolytique polymère contient un composé polymère présentant un groupe d'acide sulfonique.

4. Procédé de production selon l'une quelconque des revendications 1 à 3, dans lequel la quantité ajoutée de l'alkoxyde est comprise dans l'intervalle allant de 0,05 à 80% en poids, sur la base de la matière de la membrane électrolytique polymère.

5. Procédé de production selon l'une quelconque des revendications 1 à 4, dans lequel un alkoxyde de phosphore ou un composé de phosphore est en outre ajouté à la solution ou dispersion de l'alkoxyde.

6. Procédé de production selon l'une quelconque des revendications 1 à 5, comprenant en outre une étape au cours de laquelle une membrane stratifiée présentant deux couches ou plus est formée en combinant une membrane électrolytique polymère ne contenant pas l'élément de transition ou l'élément de terre rare.

7. Procédé de production selon l'une quelconque des revendications 1 à 6, comprenant en outre une étape au cours de laquelle une membrane stratifiée présentant deux couches ou plus est formée en combinant une couche contenant un catalyseur en mesure d'oxyder l'hydrogène sur le côté cathodique.

8. Procédé de production selon la revendication 7, dans lequel le catalyseur en mesure d'oxyder l'hydrogène est un catalyseur au charbon à charge métal.

9. Procédé de production selon l'une quelconque des revendications 1 à 5, dans lequel la membrane électrolytique polymère contient des particules de catalyseur destinées à faire office de couche d'électrode d'une pile à combustible électrolytique polymère solide.

10. Assemblage membrane-électrode destiné à une pile à combustible électrolytique polymère solide, comprenant : une membrane électrolytique polymère destinée à une pile à combustible électrolytique polymère solide, obtenue selon le procédé de production selon l'une quelconque des revendications 1 à 8, et une couche d'électrolyte.

11. Assemblage membrane-électrode destiné à une pile à combustible électrolytique polymère solide, comprenant : la membrane électrolytique polymère destinée à une pile à combustible électrolytique polymère solide, obtenue selon le procédé de production selon la revendication 9 en tant qu'au moins une des couches d'électrode.

12. Pile à combustible électrolytique polymère solide, comprenant : l'assemblage membrane-électrode selon la revendication 10 ou 11.
